# EUROPÄISCHE PATENTANMELDUNG

(11) **EP 2 527 878 A2**
(43) Veröffentlichungstag der Anmeldung: **28.11.2012**
(21) Anmeldenummer: 12002694.3
(22) Anmeldetag: 18.04.2012
(51) Int. Cl.: G01V 8/20

(54) **Lichtschranke**

(30) Priorität: 23.05.2011 DE 102011102312
(71) Anmelder: Marantec Antriebs- und Steuerungstechnik GmbH & Co. KG., 33428 Marienfeld (DE)
(72) Erfinder: Haskenhoff, Gerd, 33790 Halle (DE)
(74) Vertreter: Laufhütte, Dieter

(57) **Zusammenfassung**

Die vorliegende Erfindung betrifft eine Lichtschranke zur Überwachung eines Torlaufweges aus einem Sender, einem Empfänger, einer Steuerung zur Ansteuerung des Senders und einer Auswerteeinheit zur Auswertung eines Signals vom Empfänger, wobei die Steuerung den Sender so ansteuert, daß das vom Sender abgegebene Signal in einer ersten Zeitspanne eine Signalstärke unterhalb einer Sendersignalschwelle und in einer zweiten Zeitspanne eine Signalstärke oberhalb der Sendersignalschwelle aufweist, wobei die Auswerteeinheit das vom Empfänger empfangene Signal nur dann als gültig erkennt, wenn es eine diesem Muster entsprechende Signalform aufweist.

## Beschreibung

Die vorliegende Erfindung betrifft eine Lichtschranke zur Überwachung eines Torlaufweges aus einem Sender, einem Empfänger, einer Steuerung zur Ansteuerung des Senders und einer Auswerteeinheit zur Auswertung eines Signals vom Empfänger.

Solche Lichtschranken werden seit langem dazu eingesetzt, um die Sicherheit beim Betrieb von Torantrieben zu erhöhen. Ein Hindernis, welches in den Torlaufweg eindringt bzw. sich in diesem befindet unterbricht dabei den Lichtweg zwischen Sender und Empfänger, was von der Lichtschranke zur Torsteuerung signalisiert wird. Die Torsteuerung bringt daraufhin das Tor in einen sicheren Zustand.

Allerdings sind solche Lichtschranken einer Vielzahl von Störeinflüssen, wie Streulicht ausgesetzt, was die Sicherheit, mit welcher ein Hindernis erkannt wird, verringern kann.

Aufgabe der vorliegenden Erfindung ist es daher, eine Lichtschranke zur Überwachung eines Torlaufweges zur Verfügung zu stellen, welche eine sicherere Erkennung von Hindernissen ermöglicht.

Erfindungsgemäß wird diese Aufgabe durch eine Lichtschranke gemäß Anspruch 1 gelöst. Die erfindungsgemäße Lichtschranke zur Überwachung eines Torlaufweges umfaßt dabei einen Sender, einen Empfänger, eine Steuerung zur Ansteuerung des Senders und eine Auswerteeinheit zur Auswertung eines Signals vom Empfänger. Erfindungsgemäß steuert die Steuerung den Sender dabei so an, daß das vom Sender abgegebene Signal in einer ersten Zeitspanne eine Signalstärke unterhalb einer Sendersignalschwelle und in einer zweiten Zeitspanne eine Signalstärke oberhalb einer Sendersignalschwelle aufweist. Die Auswerteeinheit erkennt das vom Empfänger empfangene Signal dabei nur dann als gültig an, wenn es eine diesem Muster entsprechende Signalform aufweist. Durch die Verwendung unterschiedlicher Signalstärken während der ersten und zweiten Zeitspanne werden Störungen durch Fremdlicht bei der Erkennung von Hindernissen im wesentlichen eliminiert, da es sehr unwahrscheinlich ist, das Fremdlicht genau die erwartete Signalform aufweist.

Vorteilhafterweise ist dabei die Signalstärke des vom Sender abgegebenen Signals während der ersten und/oder der zweiten Zeitspanne jeweils konstant, so daß der Sender während der ersten Zeitspanne mit einer ersten Signalstärke und während der zweiten Zeitspanne mit einer zweiten Signalstärke arbeitet. Dies ermöglicht eine besonders einfache Ansteuerung. Vorteilhafterweise ist dabei die erste Signalstärke gleich Null. Weiterhin vorteilhafterweise ist die zweite Signalstärke größer Null. Erfindungsgemäß kann damit vorgesehen sein, daß das erfindungsgemäße Signal in einer ersten Stufe gleich Null ist und in einer zweiten Stufe eine zweite Signalstärke größer Null aufweist.

Vorteilhafterweise überprüft die Auswerteeinheit dabei das vom Empfänger erzeugte Signal dahingehend, ob es unter oder über einer bestimmten Empfängersignalschwelle liegt. Die Auswerteeinheit hat damit lediglich zwei Ausgangszustände, das heißt es wird entweder ein ausreichendes Signal empfangen, oder es wird kein ausreichendes Signal empfangen. Dies macht die Weiterverarbeitung des von der Auswerteeinheit abgegebenen Signals besonders einfach.

Vorteilhafterweise erkennt die Auswerteeinheit das vom Empfänger empfangene Signal nur dann als gültig, wenn die Signalstärke während der ersten Zeitspanne unterhalb der Empfängersignalschwelle und während der zweiten Zeitspanne oberhalb der Empfängersignalschwelle liegt. Die Auswerteeinheit überprüft damit, ob das vom Empfänger empfangene Signal in seiner zeitlichen Struktur dem vom Sender abgegebenen Signal entspricht.

Empfängt die Auswerteeinheit dabei kein gültiges Signal vom Empfänger, schließt sie darauf, daß sich ein Hindernis im Torlaufweg befindet und meldet dies der Torsteuerung.

Bei bekannten Lichtschranken besteht weiterhin die Problematik, daß es oftmals schwierig ist, die zum zuverlässigen Betrieb der Lichtschranke notwendige Sendeleistung des Senders der Lichtschranke einzustellen.

Es ist daher eine weitere Aufgabe der vorliegenden Erfindung, eine Lichtschranke zur Verfügung zu stellen, welche eine selbsttätige Einstellung der Sendeleistung des Senders ermöglicht.

Erfindungsgemäß wird diese Aufgabe durch eine Lichtschranke gemäß Anspruch 4 gelöst. Die erfindungsgemäße Lichtschranke zur Überwachung eines Torlaufweges umfaßt dabei einen Sender, einen Empfänger, ein Steuerung zur Ansteuerung des Senders und eine Auswerteeinheit zur Auswertung eines Signals vom Empfänger. Erfindungsgemäß steuert die Steuerung den Sender dabei so an, daß das vom Sender abgegebene Signal in einer dritten Zeitspanne eine dritte Signalstärke aufweist, welche in einem festen Verhältnis zu einer während einer zweiten Zeitspanne abgegebenen zweiten Signalstärke steht und kleiner als diese ist. Erfindungsgemäß bewertet die Auswerteeinheit dabei das vom Empfänger erzeugte Signal dahingehend, ob es unter oder über einer gewissen Empfängersignalschwelle liegt. Die Steuerung kann so das während der zweiten Zeitspanne erzeugte Signal dazu heranziehen, um die Sendeleistung des Senders zu regeln. Insbesondere kann dabei durch die gleiche Auswerteeinheit, welche während der ersten und dritten Zeitspanne ermittelt, ob ein gültiges Signal vorliegt, dazu herangezogen werden, daß während der zweiten Zeitspanne vom Sender erzeugte Signal zur Regelung der Sendeleistung des Senders heranzuziehen.

Vorteilhafterweise erhöht dabei die Steuerung die Sendeleistung des Senders, wenn das während der zweiten Zeitspanne empfangene Signal unter der Empfängersignalschwelle liegt, während die Sendeleistung des Senders verringert wird, wenn das während der zweiten Zeitspanne empfangene Signal über der Empfängersignalschwelle liegt.

Insbesondere wird dabei die Sendeleistung für den nächsten Rampendurchlauf jeweils um einen gewissen Betrag erhöht bzw. verringert, wobei die entsprechende Regelung dann für dieses Signal wiederholt wird.

Die Signalstärke während der dritten Zeitspanne kann dabei zur Signalspanne während der zweiten Zeitspanne des Signals beispielsweise ein Verhältnis zwischen 1:10 und 1:1,1 aufweisen, beispielsweise ein Verhältnis von 1:2 oder 1:1,5. Dieses Verhältnis zwischen der Signalstärke während der zweiten und der dritten Zeitspanne stellt dabei ein, um wie viel die Sendeleistung während der zweiten Zeitspanne die zur Übertragung eines gültigen Signals gerade notwendige Signalstärke übertrifft.

Der Betrag, um welchen die Signalstärke dabei jeweils in Abhängigkeit von dem während der zweiten Zeitspanne empfangenen Signal erhöht bzw. verringert wird, ist dabei vorteilhafterweise kleiner als der Abstand zwischen der Signalstärke während der zweiten und der Signalstärke während der dritten Zeitspanne, insbesondere deutlich kleiner, so daß sichergestellt ist, daß die Sendeleistung immer dazu ausreicht, um während der dritten Zeitspanne ein gültiges Signal zu senden.

Die erfindungsgemäße Leistungsregelung durch eine zweite Signalstärke während einer zweiten Zeitspanne des Signals kann dabei erfindungsgemäß auch unabhängig von der zuvor beschriebenen unterschiedlichen Signalform während einer ersten und dritten Zeitspanne, welche der Erhöhung der Sicherheit dient, angewandt werden.

Besonders vorteilhaft werden jedoch beide Methoden miteinander verknüpft, so daß beispielsweise während einer ersten Zeitspanne eine Signalstärke von Null, während einer zweiten Zeitspanne eine zweite Signalstärke größer Null und während der dritten Zeitspanne eine dritte Signalstärke, welche in einem festen Verhältnis zu der während der zweiten Zeitspanne abgegebenen zweiten Signalstärke steht und kleiner als diese ist, abgegeben wird. Die erste und die dritte Signalstärke während der ersten und dritten Zeitspanne bilden dann wie oben beschrieben das gültige Signal, welches es verhindert, daß Fremdlicht die Hinderniserkennung beeinflußt. Die zweite Signalstärke während der zweiten Zeitspanne wird dann zur Leistungsregelung herangezogen. Die zeitliche Aufeinanderfolge der einzelnen Zeitspannen ist dabei beliebig.

Die erfindungsgemäße Lichtschranke kann dabei als einzelne Lichtschranke zur Überwachung eines Torlaufwegs eingesetzt werden. Besonders vorteilhaft werden jedoch mehrere erfindungsgemäße Lichtschranken zur Überwachung eines Torlaufweges in Form eines Lichtgitters aus einer Mehrzahl von übereinander angeordneten Lichtschranken kombiniert.

Neben der Lichtschranke als solcher umfaßt die vorliegende Erfindung daher weiterhin ein Lichtgitter zur Überwachung eines Torlaufwegs aus einer Mehrzahl von übereinander angeordneten Lichtschranken, wie sie oben beschrieben wurden. Vorteilhafterweise weist das Lichtgitter dabei eine gemeinsame Steuerung zur Ansteuerung der Lichtschranken auf. Weiterhin kann das erfindungsgemäße Lichtgitter vorteilhafterweise eine gemeinsame Auswerteeinheit zur Auswertung der Signale der Lichtschranken umfassen.

Vorteilhafterweise werden dabei die einzelnen Lichtschranken nacheinander so angesteuert, daß jeweils nur maximal eine Lichtschranke aktiv ist. Hierdurch wird verhindert, daß sich die einzelnen Lichtschranken untereinander beeinflussen.

In einer bevorzugten Ausführungsform ist dabei mindestens eine Schaltsignalleitung vorgesehen, über welche die Lichtschranken nacheinander ein- und ausgeschaltet werden, und mindestens eine Steuersignalleitung, über welche die vom Sender abgestrahlte Signalform gesteuert wird. Dies ermöglicht es, das Ein- und Ausschalten der einzelnen Lichtschranken sowie die erfindungsgemäß von den einzelnen Lichtschranken abgegebene Signalform getrennt voneinander zu steuern.

Vorteilhafterweise wird dabei die gleiche Schaltsignalleitung zur Ansteuerung aller Lichtschranken herangezogen. Weiterhin vorteilhafterweise wird auch die gleiche Steuersignalleitung zur Ansteuerung aller Lichtschranken herangezogen. Dies ermöglicht eine besonders einfache Verdrahtung der Lichtschranken.

Weiterhin vorteilhafterweise geben die Empfänger der Lichtschranken ein Signal an eine gemeinsame Ausgangssignalleitung ab, wobei die Auswerteschaltung das Signal auf dieser gemeinsamen Ausgangssignalleitung auswertet. Auch dies vereinfacht die Verdrahtung der einzelnen Lichtschranken im Lichtgitter.

Vorteilhafterweise weist die Auswerteschaltung dabei eine Lernfunktion auf, welche das von den einzelnen Lichtschranken durch das Signal auf der Schaltsignalleitung nacheinander abgegebene Signal bei unversperrtem Weg und maximaler Sendeleistung als Referenzsignal abspeichert. Zunächst werden daher im Rahmen der Lernfunktion die oben beschriebenen Signalformen der einzelnen Lichtschranken nicht eingesetzt, sondern lediglich das von den einzelnen Lichtschranken im Lichtgitter durch das aufeinanderfolgende Ein- und Ausschalten erzeugte Signal ermittelt.

Vorteilhafterweise werden dabei die Zeiten abgespeichert, zu denen das von den einzelnen Empfängern erzeugte Signal beginnt und/oder endet, und damit insbesondere die Signalbreite des gesamten von der jeweiligen Lichtschranke erzeugten Signals bestimmt.

Im darauffolgenden Betrieb teilt die Steuerung dann vorteilhafterweise die den jeweiligen Lichtschranken zugeordneten Zeitbereiche in einem ersten, zweiten und/oder dritten Zeitbereich gemäß der vorliegenden Erfindung auf.

An Stelle einer Referenzierung an bestimmte Zeitpunkte ist es selbstverständlich auch möglich, eine Referenzierung der Signale auf der Steuersignalleitung an das auf der Schaltsignalleitung übertragene Signal vorzunehmen. Entscheidend ist dabei lediglich, daß die Signale auf der Schaltsignalleitung, welche die einzelnen Lichtschranken ein- und ausschalten, entsprechend mit den auf der Steuersignalleitung übertragenen Signalen, welche die Sendeleistung und die Signalform bestimmen, synchronisiert sind.

Vorteilhafterweise erfolgt die Ansteuerung der Lichtschranken dabei über ein analoges Schaltsteuersignal auf der Schaltsignalleitung. Insbesondere kann hierbei eine Rampenfunktion eingesetzt werden, bei deren Durchlaufen die einzelnen Lichtschranken nacheinander ein- und ausgeschaltet werden.

Vorteilhafterweise wird dabei ein einziges Signal zur Ansteuerung aller Lichtschranken eingesetzt. Insbesondere kann das gleiche Signal sowohl zur Ansteuerung der Sender als auch zur Ansteuerung der Empfänger verwendet werden.

Besonders bevorzugt weisen die Sender und/oder die Empfänger der erfindungsgemäßen Lichtschranken dabei jeweils einen Fensterkomparator auf, welcher den Sender bzw. Empfänger einschaltet, wenn die am Fensterkomparator anliegende Spannung in einem vorbestimmten Fenster liegt. Weiterhin kann vorgesehen sein, daß die Sender und/oder Empfänger jeweils einen Meßwiderstand aufweisen, wobei die Meßwiderstände der Sender und die Meßwiderstände der Empfänger im Gitter jeweils in Reihe geschaltet sind.

Vorteilhafterweise ist dabei vorgesehen, daß die Fensterkomparatoren jeweils eine Spannung abgreifen, welche an den in Reihe geschalteten Meßwiderständen abfällt. Hierdurch können die einzelnen Lichtschranken durch ihre Fensterkomparatoren, wenn das Schaltsteuersignal eine Rampenfunktion durchläuft, jeweils nacheinander ein- und ausgeschaltet werden.

Vorteilhafterweise greifen die Fensterkomparatoren dabei jeweils eine Spannung ab, welche an den in Reihe geschalteten Meßwiderständen abfällt, wobei die Spannung vorteilhafterweise jeweils zwischen einem gemeinsamen Spannungseingang der Lichtschranken und einem Anschluß des dem jeweiligen Fensterkomparator zugeordneten Messwiderstands abgegriffen wird. Vorteilhafterweise wird demgemäß das Schaltsteuersignal an den in Reihe geschalteten Meßwiderständen der Empfänger bzw. der Sender angelegt. Vorteilhafterweise sind dabei die in Reihe geschalteten Meßwiderstände der Empfänger und die in Reihe geschalteten Meßwiderstände der Sender parallel geschaltet, so daß Sender und Empfänger jeweils gleichzeitig ein- und ausgeschaltet werden.

Insbesondere sind dabei erfindungsgemäß die einzelnen Lichtschranken identisch ausgeführt. Insbesondere können dabei die gleichen Meßwiderstände und/oder die gleichen Fensterkomparatoren für alle Lichtschranken eingesetzt werden.

Die erfindungsgemäße Steuerung erlaubt es dabei insbesondere, daß unterschiedlich viele Lichtschranken im erfindungsgemäßen Lichtgitter eingesetzt werden können. Sender und Empfänger müssen dabei nicht extra für die entsprechende Anzahl von Lichtschranken eingestellt werden, da die erfindungsgemäße Lernfunktion eine Ansteuerung und Auswertung unterschiedlich vieler Lichtschranken problemlos ermöglicht. Vorteilhafterweise kann das erfindungsgemäße Lichtgitter dabei mehr als fünf, weiterhin vorteilhafterweise mehr als zehn, weiterhin vorteilhafterweise mehr als fünfzehn Lichtschranken umfassen.

Die vorliegende Erfindung umfaßt weiterhin eine Torsteuerung zur Ansteuerung eines Torantriebs mit einer Lichtschranke oder einem Lichtgitter, wie es oben beschrieben wurde. Die Lichtschranke bzw. das Lichtgitter signalisieren dabei der Torsteuerung, ob sich ein Hindernis im überwachten Torlaufweg befindet. Wird ein Hindernis signalisiert, so bringt die Torsteuerung das Tor in einen sicheren Zustand. Insbesondere kann dabei der Tor gestoppt oder zurückgefahren werden.

Die vorliegende Erfindung wird nun anhand von Ausführungsbeispielen sowie Zeichnungen näher dargestellt. Dabei zeigen:
- Figur 1:: eine Prinzipdarstellung eines durch Lichtschranken bzw. ein Lichtgitter gemäß der vorliegenden Erfindung überwachten Torlaufweges,
- Figur 2:: eine Schaltungsanordnung für ein Ausführungsbeispiel erfindungsgemäßer Lichtschranken bzw. eines erfindungsgemäßen Lichtgitters,
- Figur 3:: ein Diagramm, welches einen Signalverlauf bei einem Ausführungsbeispiel einer erfindungsgemäßen Leistungsregelung und einer erfindungsgemäßen Gültigkeitsüberwachung zeigt,
- Figur 4:: ein Lichtgitter, welches aus einem erfindungsgemäßen Set aus Elementen aufgebaut ist,
- Figuren 5a - c:: drei Schritte eines erfindungsgemäßen Verfahrens zum Aufbau eines Lichtgitters aus einem erfindungsgemäßen Set,
- Figuren 6a, 6b:: zwei perspektivische Ansichten von Konnektoren eines erfindungsgemäßen Sets und
- Figur 7:: eine Schnittansicht durch einen Verbindungsbereich zweier Elemente eines erfindungsgemäßen Sets.

Im folgenden wird ein Ausführungsbeispiel der vorliegenden Erfindung gezeigt, welches mehrere Aspekte der vorliegenden Erfindung verwirklicht. Während die mehreren Aspekte der vorliegenden Erfindung damit im Ausführungsbeispiel miteinander kombiniert sind, ist es ebenso denkbar, die einzelnen Aspekte auch getrennt voneinander erfindungsgemäß einzusetzen.

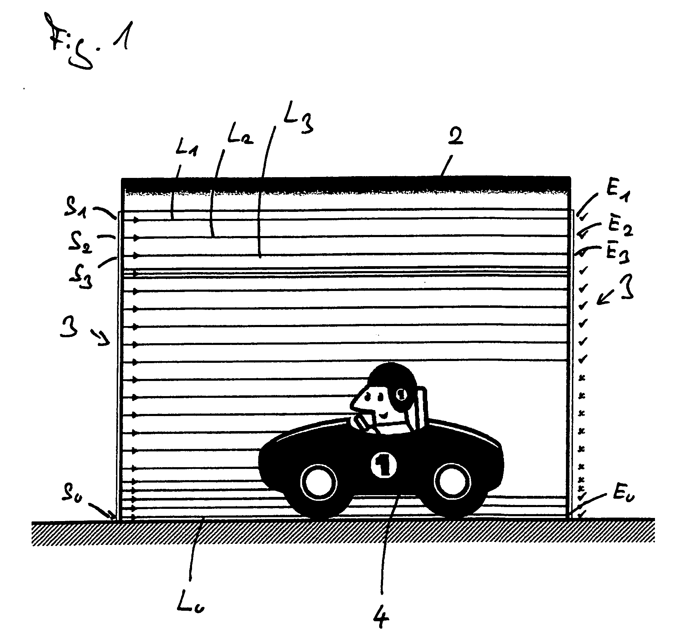

Figur 1 zeigt in einer Prinzipdarstellung ein Ausführungsbeispiel die Funktionsweise eines erfindungsgemäßen Lichtgitters, welches den Torlaufweg eines Torblatts 2 berührungslos absichert. Das Lichtgitter besteht dabei im Prinzip aus einer Aneinanderreihung von Einweglichtschranken L₁ - Lₙ. Die Lichtschranken werden dabei in bestimmten Abständen übereinander angeordnet, so daß ein Hindernis an beliebiger Position in der so entstehenden überwachten Fläche erkannt werden kann.

Jede Lichtschranke L₁ - Lₙ umfaßt dabei einen Sender S₁ - Sₙ, welcher mit einem Empfänger E₁ - Eₙ zusammenwirkt und gemeinsam mit diesem den überwachten Lichtweg definiert. Befindet sich nun ein Hindernis 4 im Lichtweg, kann der entsprechende Empfänger das vom Sender abgesendete Signal nicht empfangen, da das Hindernis 4 den Lichtweg unterbricht. Liefert daher einer der Empfänger des Lichtgitters kein gültiges Signal, kann daran erkannt werden, daß sich ein Hindernis 4 im überwachten Torlaufweg befindet. Erkennt das Lichtgitter ein solches Hindernis, wird dies der Torsteuerung signalisiert, welche dann wiederum das Tor in einen sicheren Zustand bringt.

Das Lichtgitter weist dabei eine Steuerung auf, welche die einzelnen Lichtschranken ansteuert. Weiterhin weist das Lichtgitter eine Auswerteeinheit auf, welche die Signale von den Empfängern der einzelnen Lichtschranken auswertet. In einer bevorzugten Ausführungsform signalisiert die Auswerteschaltung dabei der Torsteuerung lediglich, daß sich ein Hindernis im überwachten Bereich befindet. Von der Torsteuerung aus gesehen arbeitet das Lichtgitter damit im wesentlichen wie eine übliche Lichtschranke, welche ebenfalls nur die beiden Zustände Hindernis/kein-Hindernis unterscheidet. Hierdurch kann das erfindungsgemäße Lichtgitter mit konventionellen Torsteuerungen kombiniert werden.

Gemäß einem ersten Aspekt der vorliegenden Erfindung werden die einzelnen Lichtschranken L₁ - Lₙ des Lichtgitters in einem Multiplexverfahren nacheinander angesteuert und abgefragt. Am Ende eines Multiplexdurchlaufs müssen dabei alle Empfänger ein gültiges Signal empfangen haben. Haben nicht alle Empfänger ein gültiges Signal gemeldet, so schließt die Auswerteeinheit, daß sich ein Hindernis im Lichtweg befindet und signalisiert dies der Torsteuerung.

Erfindungsgemäß gewährleistet dabei die Ansteuerung der Lichtschranken, daß ein Sender nur seinen jeweils zugehörigen Empfänger ansteuert. Dies ist mit Hilfe der Multiplexsteuerung realisiert. Dabei werden die einzelnen Lichtschranken nacheinander angesteuert, so daß immer maximal ein Sender-Empfänger-Paar aktiv ist. So kann das empfangene Signal zu jeder Zeit eindeutig zugeordnet werden.

Vorteilhafterweise werden dabei die einzelnen Sender-Empfänger-Paare nacheinander jeweils so ein- und ausgeschaltet, daß sowohl der Sender als auch der Empfänger ein- bzw. ausgeschaltet werden.

Hierdurch kann jeder Lichtweg eindeutig ausgewertet werden. Die durch die parallele Anordnung der Lichtwege prinzipiell bestehende Möglichkeit, daß sich benachbarte Lichtwege gegenseitig beeinflussen, wird so ausgeschlossen.

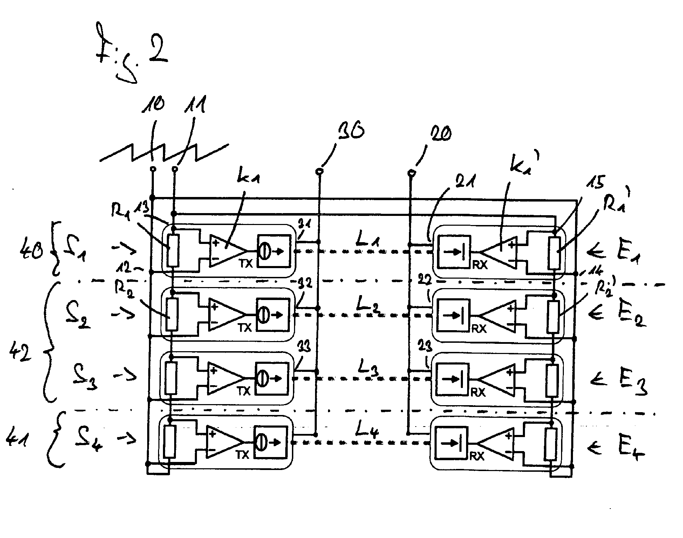

Für das erfindungsgemäße Multiplexverfahren müssen dabei die Sender mit ihren zugehörigen Empfängern synchronisiert werden. Dies kann beispielsweise durch eine Schaltungsanordnung geschehen, wie sie in Figur 2 gezeigt ist.

Jeder Sender Sₙ und jeder Empfänger Eₙ umfaßt dabei einen Fensterkomparator Kₙ bzw. K'ₙ und einen Meßwiderstand Rₙ bzw. R'ₙ. Die Fensterkomparatoren Kₙ schalten dabei die Sender Sₙ ein, wenn an dem Meßwiderstand Rₙ ein bestimmter Spannungsabfall anliegt, und die Fensterkomparatoren K'ₙ schalten die Empfänger Eₙ ein, wenn an dem zugeordneten Meßwiderstand R'ₙ ein bestimmter Spannungsabfall anliegt.

Sämtliche Meßwiderstände Rₙ und R'ₙ, sowie Komparatoren Kₙ und K'ₙ können dabei identisch sein, das heißt die Meßwiderstände können alle den gleichen Widerstand und die Komparatoren können alle das gleiche Schaltfenster aufweisen.

Die Meßwiderstände Rₙ der Sender Sₙ auf der einen Seite des Lichtgitters und die Meßwiderstände R'ₙ der Empfänger Eₙ auf der anderen Seite des Lichtgitters werden dabei jeweils in Reihe geschaltet. Die in Reihe geschalteten Meßwiderstände Rₙ bzw. R'ₙ werden nun wiederum parallel geschaltet, so daß die Senderseite und die Empfängerseite parallel geschaltet ist, während die einzelnen Sender bzw. Empfänger der Lichtschranken in Reihe geschaltet sind.

Die Komparatoren greifen dabei jeweils eine Spannung zwischen einer gemeinsamen Signalleitung 10 und einem Anschluß des ihnen zugeordneten Meßwiderstands in der Reihenschaltung ab. Hierdurch liegt an jedem Komparator in der Reihenschaltung eine unterschiedliche Spannung an. An den Komparatoren der einander zugeordneten Sender und Empfänger liegt dagegen jeweils die gleiche Spannung an.

Erfindungsgemäß durchläuft nun die Spannung an der Reihenschaltung aus Meßwiderständen eine Rampenfunktion. Dadurch werden die einzelnen Sender-Empfänger-Paare durch ihre Fensterkomparatoren nacheinander ein- und wieder ausgeschaltet. Dies erlaubt es, mit Hilfe eines analogen Signals die einzelnen Lichtschranken nacheinander ein- und auszuschalten.

Im Ausführungsbeispiel wird dabei das Steuersignal zum Ein- und Ausschalten der Lichtschranken zwischen den Signalleitungen 10 und 11 angelegt, welche mit den beiden Enden der Reihenschaltung verbunden sind. Der Komparator K₁ des Senders S₁ greift nun die Spannung zwischen der Steuerleitung 10, mit welcher er über die Verbindung 12 verbunden ist, und dem Anschluß 13 des ihm zugeordneten Meßwiderstands R₁ in der Reihenschaltung ab. Der Komparator K'₁ des Empfängers E₁ greift in analoger Weise die Spannung zwischen den Punkten 14 und 15 ab.

Da es sich bei dem Sender-Empfänger-Paar S₁ - E₁ um die erste Lichtschranke in der Reihenschaltung handelt, greifen die Komparatoren dabei die gesamte über die Reihenspannung abfallende Spannung ab. Bei den darunter liegenden Lichtschranken greifen die Komparatoren dagegen die Spannung jeweils nur über einen Teil der Reihenschaltung ab, so daß die Spannung entsprechend geringer ist.

Durch eine entsprechende Einstellung des Fensters der Komparatoren und des Steuersignals zum Schalten der Lichtschranken kann so sichergestellt werden, daß bei einem Durchlauf des Steuersignals, beispielsweise bei einem Durchlauf der Rampe, alle Lichtschranken nacheinander ein- und ausgeschaltet werden, ohne daß mehrere Lichtschranken gleichzeitig aktiv wären.

Die Empfänger E₁ bis Eₙ weisen dabei jeweils einen Ausgang 21, 22, ... auf, über welchen sie mit einer gemeinsamen Ausgangssignalleitung 20 in Verbindung stehen. Sämtliche Empfänger legen damit ihr Signal an die gleiche Ausgangssignalleitung 20 an, so daß die Auswerteeinheit nur das Signal auf dieser Ausgangssignalleitung auswerten muss. Die einzelnen Empfänger stören sich dabei nicht gegenseitig, da sie erfindungsgemäß nacheinander ein- und ausgeschaltet werden und damit nicht gleichzeitig aktiv sind.

Die erfindungsgemäße Steuerung weist dabei in einem Ausführungsbeispiel eine Lernfunktion auf. Dabei wird bei Inbetriebnahme das Steuersignal zum Ein- und Ausschalten der einzelnen Lichtschranken an die Signalleitungen 10 und 11 angelegt, während sich kein Hindernis im zu überwachenden Bereich befindet. Durch das Steuersignal werden nun die einzelnen Lichtschranken ein- und wieder ausgeschaltet. Die Auswerteeinheit erhält während dieses Lerndurchlaufs ein Signal auf der Ausgangssignalleitung 20, bei welchem sich die Ausgangssignale der einzelnen Empfänger durch das Ein- und wieder Ausschalten der einzelnen Lichtschranken aneinanderreihen. Die Auswerteeinheit nimmt dieses Signal nun als Referenz für den darauffolgenden Betrieb.

Insbesondere ermittelt die Auswerteeinheit dabei im Lernbetrieb, zu welchen Zeiten bzw. in welchen Bereichen des Steuersignals zum Ein- und Ausschalten der Lichtschranken ein Signal eines Empfängers auf der Ausgangssignalleitung 20 anliegt. Liegt nun während des Betriebs in den zuvor ermittelten Bereichen kein Ausgangssignal eines Empfängers an der Ausgangssignalleitung 20 an, so schließt die Auswerteeinheit hieraus, daß sich ein Hindernis im überwachten Bereich befindet.

Der erfindungsgemäße Aufbau des Lichtgitters aus mehreren in Reihe geschalteten Lichtschranken erlaubt dabei eine einfache Kaskadierung des Lichtgitters. Insbesondere kann dabei die Steuerung und die Auswerteeinheit mit unterschiedlich vielen Lichtschranken betrieben werden, ohne daß sie hierfür speziell programmiert werden müßte. Die erfindungsgemäße Ein- und Ausschaltung über die Komparatoren erlaubt es vielmehr, mit einer im wesentlichen frei wählbaren Anzahl von Lichtschranken zu arbeiten.

Die Lernfunktion erlaubt es weiterhin, mit der gleichen Auswerteeinheit ebenfalls unterschiedlich viele Lichtschranken zu betreiben. Die Auswerteeinheit muss dabei nicht im Voraus wissen, wie viele Lichtschranken eingesetzt werden, sondern ermittelt das Referenzsignal während des Lernbetriebs.

Insbesondere kann das Lichtgitter dabei so ausgelegt sein, daß mit einer bis zu 5 Lichtschranken, vorteilhafterweise bis zu 10 Lichtschranken, weiter vorteilhafterweise bis zu 15 Lichtschranken gearbeitet werden kann.

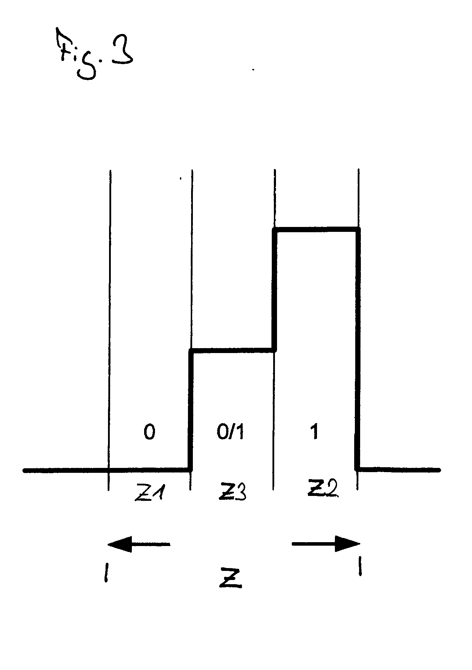

In Figur 3 ist nun ein zweiter Aspekt der vorliegenden Erfindung dargestellt, welcher sowohl bei einem Lichtgitter als auch bei einer einzelnen Lichtschranke eingesetzt werden kann. Erfindungsgemäß ist dabei ein mehrstufiger Signalaufbau des von einem Sender S abgegebenen Signals vorgesehen, um die Signale überwachen und/oder die Sendeleistung regeln zu können.

Die Signalbreite Z eines vom Sender abgegebenen Signals wird dabei in drei Zeitbereiche Z1, Z2 und Z3 unterteilt.

Im ersten Zeitbereich Z1 wird dabei kein Signal gesendet, im zweiten Zeitbereich Z2 ein Signal mit einer gewissen Signalstärke bzw. Signalamplitude. Die Auswerteeinheit ist dabei so aufgebaut, daß sie anhand einer Empfängersignalschwelle entscheidet, ob ein Signal empfangen wird oder nicht. Dies entspricht im wesentlichen einer digitalen Auswertung, bei welcher dem Signal eine Null oder eine Eins zugeordnet wird.

Ein Signal wird dabei von der Auswerteeinheit nur dann als gültig gewertet, wenn im Zeitbereich Z1 eine Null und im Zeitbereich Z2 eine Eins empfangen wird, d.h. wenn im Zeitbereich Z1 die Signalstärke unterhalb der Empfängersignalschwelle liegt und im Zeitbereich Z2 oberhalb. Damit können Störungen durch Fremdlicht verhindert werden. Insbesondere ist es sehr unwahrscheinlich, das Fremdlicht genau die erwartete Signalform aufweist, so daß Fremdlicht den Betrieb der Lichtschranke nicht beeinträchtigt.

Mit Hilfe des dritten Zeitbereichs Z3 kann die Sendeleistung geregelt werden. Die Signalamplitude im dritten Zeitbereich beträgt immer einen festen Bruchteil der Amplitude im zweiten Zeitbereich. Z. B. kann die Amplitude im zweiten Zeitbereich das doppelte der Amplitude im dritten Zeitbereich betragen. Wird nun im dritten Zeitbereich eine Null empfangen, dann wird die Sendeleistung geringfügig erhöht. Wird dagegen eine Eins empfangen, wird die Sendeleistung geringfügig gesenkt. So wird die Sendeleistung im zweiten Zeitbereich, welche für die Gültigkeit des Signals entscheidend ist, immer so eingeregelt, daß sie einen festen Faktor höher ist als die für eine ordnungsgemäße Signalübertragung gerade notwendige Leistung. Die beiden Aspekte der Signalüberwachung und der Leistungsregelung durch die unterschiedlichen Signalamplituden in den drei Zeitbereichen können dabei offensichtlich auch unabhängig voneinander eingesetzt werden. Weiterhin ist die zeitliche Abfolge der drei Zeitbereiche aufeinander nicht festgelegt. Im Ausführungsbeispiel folgt dabei auf den ersten Zeitbereich der dritte Zeitbereich und auf diesen der zweite Zeitbereich.

Die Signalüberwachung und Leistungsregelung, wie sie in Figur 3 gezeigt ist, kann dabei sowohl bei Einzellichtschranken eingesetzt werden, als auch bei einem Lichtgitter. Die Reihenfolge der Zeitbereiche gemäß Figur 3 kann im Rahmen der Erfindung beliebig getauscht werden.

Bei dem in Figur 2 gezeigten Aufbau eines Lichtgitters gemäß dem ersten Aspekt der vorliegenden Erfindung kann die Signalüberwachung und/oder Leistungsregelung gemäß dem zweiten Aspekt dabei dadurch implementiert werden, daß die Sender sämtlicher Lichtschranken über entsprechende Eingänge 31, 32, ... mit einer Steuersignalleitung 30 in Verbindung stehen, über welche die Sendeleistung bzw. die Signalform eingestellt wird.

Die Signalleitungen 10 und 11 wirken damit als Schaltsignalleitungen, über welche das Schaltsteuersignal angelegt wird, welches die einzelnen Lichtschranken nacheinander ein- und ausschaltet. Die Steuersignalleitung 30 dient dagegen zur Steuerung der Sendeleistung bzw. der Signalform für die einzelnen Sender der Lichtschranken, zu den Zeitpunkten, zu welchen diese aktiv sind.

Die oben beschriebene erfindungsgemäße Lernfunktion kann dabei auch dazu eingesetzt werden, die Steuersignale auf der Steuerleitung 30 mit den Schaltsteuersignalen an den Steuerleitungen 10 und 11 zu synchronisieren. Dabei wird im Lernmodus zunächst an der Steuersignalleitung 30 ein Signal angelegt, welches durchgehend eine maximale Sendeleistung der jeweils aktiven Sender erzeugt. Wird nun das Schaltsteuersignal durchlaufen, senden die Sender nacheinander jeweils mit maximaler Leistung für den gesamten Zeitraum, in welchem sie aktiv sind. Über das durch die Empfänger empfangene Signal kann nun die Signalbreite Z eines jeden Sender-Empfänger-Paares ermittelt und mit dem Schaltsteuersignal korreliert werden. Die Steuerung unterteilt diese Signalbreite Z dann entsprechend in drei Zeitabschnitte Z1 - Z3, in welchen im darauffolgenden Betrieb über das Signal auf der Steuersignalleitung 30 der erfindungsgemäße mehrstufige Signalaufbau für jeden Sender erzeugt wird.

Die Leistungsregelung über den dritten Zeitabschnitt kann dabei erfindungsgemäß entweder für jeden Sender separat, oder durch eine Mitteilung der in den jeweiligen dritten Zeitabschnitten Z3 empfangenen Signale erfolgen.

Wie bereits oben beschrieben erlaubt der erfindungsgemäße Aufbau des Lichtgitters einen Betrieb mit einer unterschiedlichen Anzahl von Lichtschranken. Erfindungsgemäß sind die Zeitfenster der Komparatoren und das Schaltsteuersignal dabei so ausgelegt, daß mehr als fünf, vorteilhafterweise mehr als zehn, weiterhin vorteilhafterweise mehr als fünfzehn Lichtschranken in Reihe geschaltet werden können.

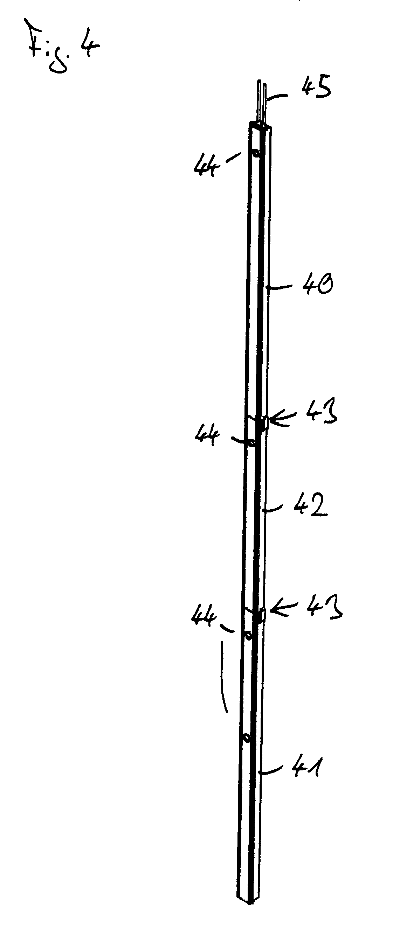

Als dritten Aspekt der vorliegenden Erfindung zeigen Figuren 4 bis 7 ein Ausführungsbeispiel eines Sets zum Aufbau eines Lichtgitters und das entsprechende Verfahren zum Aufbau des Lichtgitters, durch welches ein Lichtgitter aus vorgefertigten Elementen eines Baukastensystems jeweils in der gewünschten Länge zusammengefügt werden kann. Die Sender und Empfänger des erfindungsgemäßen Lichtgitters sind dabei jeweils in einem langgestreckten Gehäuse untergebracht, welches durch das Baukastensystem erfindungsgemäß kaskadierbar aufgebaut ist.

Das Gehäuse besteht dabei aus mehreren Elementen, die je nach Bedarf in der entsprechenden Länge zusammengesteckt werden können. Das Set weist hierzu ein oberes Endelement 40 und ein unteres Endelement 41 für beide Seiten des Lichtgitters auf. Dazwischen können je nach Bedarf weitere Zwischenelemente 42 gesteckt werden. Die Elemente sind dabei jeweils in Verbindungsbereichen 43 miteinander verbunden. Weiterhin weisen die einzelnen Elemente Mittel 44 zur Befestigung einer Wand auf, im Ausführungsbeispiel Aussparungen, durch welche Schrauben oder Befestigungsstifte hindurch geführt werden können.

In zumindest einem Endelement ist dabei vorteilhafterweise auch eine Steuerung und/oder eine Auswerteeinheit vorgesehen, welche sämtliche Lichtschranken des Gitters ansteuert bzw. die Signale von diesen auswertet. Die beiden Endelemente der linken und rechten Seite des Lichtgitters sind dabei über Signalleitungen 45 miteinander verbunden, um eine entsprechende Synchronisation und eine Signalübertragung zu ermöglichen. Weiterhin weist mindestens eines der Endelemente eine Signalleitung zur Verbindung mit einer Torsteuerung auf.

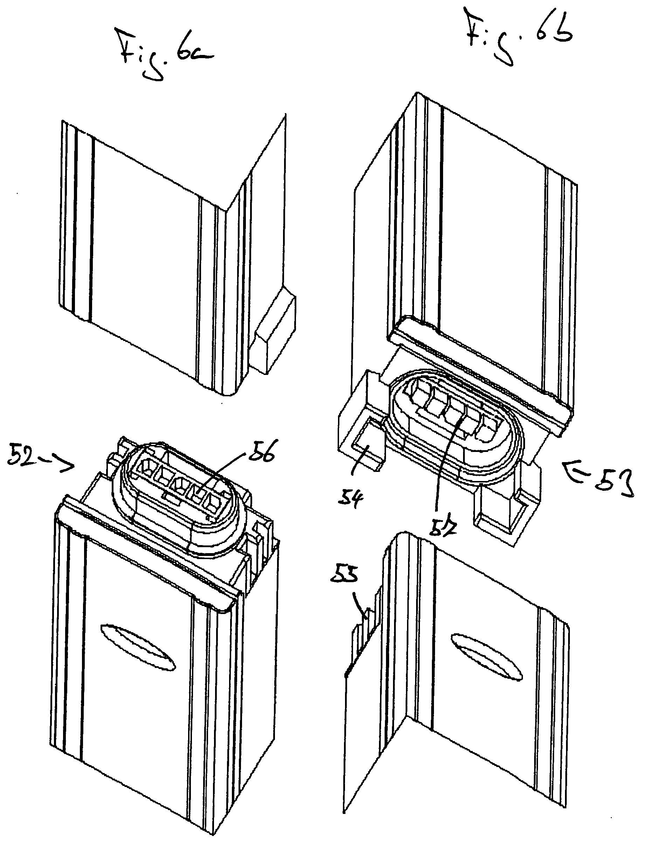

Wie insbesondere aus Figuren 6 hervorgeht, dienen die Konnektoren der einzelnen Elemente dabei sowohl der elektrischen, als auch der mechanischen Verbindung der Elemente miteinander. Die elektrische Verbindung erfolgt dabei über einen Stecker 56, welcher in eine Buchse 57 eingeschoben werden kann. Die mechanische Verbindung erfolgt über Federelemente 54, welche in Nuten 55 eingeschoben werden können. Die Endelemente 41 und 40 weisen dabei jeweils nur an ihrem oberen bzw. unteren Ende Konnektoren auf, die Zwischenelemente 42 dagegen an beiden Enden.

Jedes der Elemente kann dabei eine oder mehrere Sender bzw. Empfänger des Lichtgitters umfassen, welche vorteilhafterweise in das Gehäuse eingebaut und mit den Konnektoren verdrahtet sind.

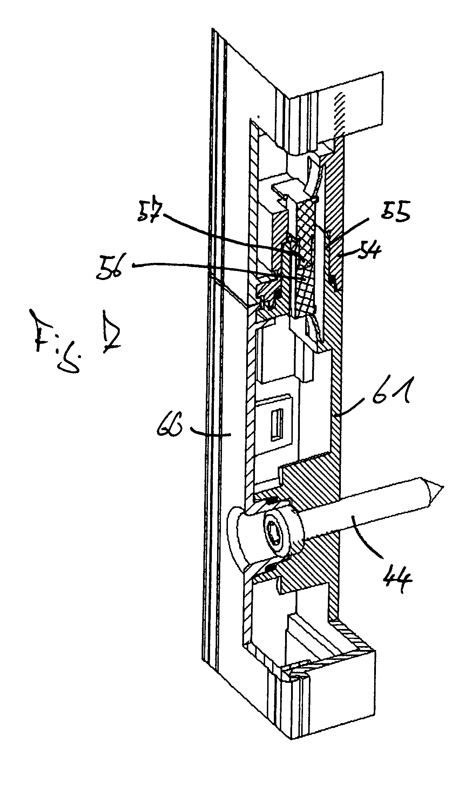

Das Gehäuse kann dabei, wie insbesondere aus Figur 7 hervorgeht, ein Deckelelement 60 sowie ein Bodenelement 61 umfassen, welche miteinander verbunden sind und das Gehäuse bilden. Die Konnektoren sind dabei jeweils in mindestens einem Endbereich des Gehäuses angeordnet.

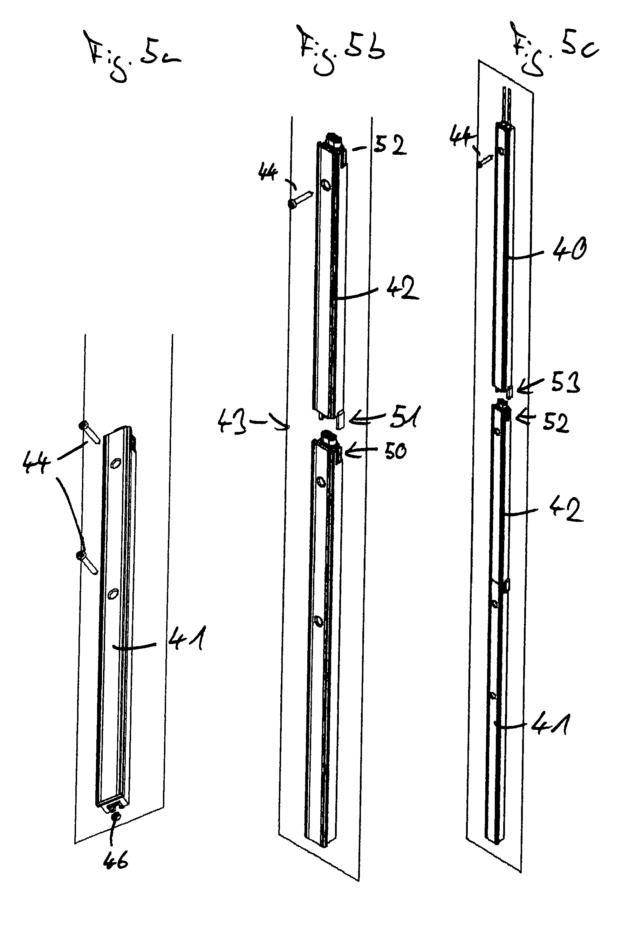

Ein Verfahren zur Montage des erfindungsgemäßen Lichtgitters ist dabei in Figuren 5 dargestellt. Dabei wird zunächst ein unteres Endelement 41 über Schrauben 44 an einer Wand befestigt. Alternativ oder zusätzlich kann das Endelement auch rückseitig auf ein Befestigungselement 46 aufgeschoben werden. Nach der Befestigung des Endelements wird nun je nach gewünschter Höhe eine entsprechende Anzahl von Zwischenstücken 42 aufgesteckt und ebenfalls an der Wand befestigt. Zuletzt wird das obere Endelement 40 aufgesteckt und befestigt.

Auf einer Seite des Tores wird dabei eine Empfängerseite aufgebaut, auf der anderen Seite eine Senderseite. Diese müssen dabei so aufeinander ausgerichtet sein, daß die jeweiligen Sender auf die ihnen zugeordneten Empfänger ausgerichtet sind. Senderseite und Empfängerseite werden über ihre entsprechenden Endstücke, insbesondere die oberen Endstücke 40, miteinander und mit der Torsteuerung verbunden.

Ein solches Baukastensystem gemäß dem dritten Aspekt der vorliegenden Erfindung kann besonders einfach mit dem als ersten Aspekt beschriebenen Aufbau eines Lichtgitters verwirklicht werden, wie er in Fig. 2 im Ausführungsbeispiel dargestellt ist.

Eine beispielhafte Aufteilung der einzelnen Lichtschranken auf die Elemente des Lichtgitters ist dabei in Figur 2 durch gestrichelte Linien dargestellt. So kann beispielsweise der Sender S₁ dem oberen Endelement 40, die Sender S₂ und S₃ dem Zwischenstück 42 und der Sender S₄ dem unteren Endstück 41 zugeordnet sein. Entsprechend sind die Empfänger E₁ bis E₄ auf oberes Endstück, Zwischenstück und unteres Endstück der Empfängerseite aufgeteilt.

Wie sofort aus Figur 2 ersichtlich, müssen dabei jeweils nur wenige elektrische Verbindungen zwischen den einzelnen Elementen über die Konnektoren hergestellt werden. Zum einen stellen die Konnektoren dabei die gemeinsame Steuerleitung 10 durch Verbindung der einzelnen Abschnitte miteinander zur Verfügung, sowie die Reihenschaltung der Meßwiderstände, und zwar auf Sender- und auf Empfängerseite. Auf der Empfängerseite wird weiterhin die gemeinsame Ausgangssignalleitung 20 durch die Konnektoren hergestellt, auf der Senderseite gegebenenfalls die gemeinsame Steuersignalleitung 30.

Die Steuerung kann dabei beispielsweise in das obere Endstück 40 auf Senderseite oder auf Empfängerseite eingebaut werden.

Wie bereits erläutert, erlaubt der Aufbau des Lichtgitters sowie die Ansteuerung dabei das Einfügen von weiteren Zwischenstücken 42 und damit das Einfügen von weiteren Lichtschranken, ohne das hierfür die Steuerung bzw. die Auswerteeinheit angepaßt werden müßten.

Die vorliegende Erfindung erlaubt somit einen besonders einfachen und dennoch sicheren Aufbau eines Lichtgitters bzw. eine entsprechende Ansteuerung des Lichtgitters oder einer Lichtschranke, wobei die einzelnen Aspekte sowohl wie im Ausführungsbeispiel kombiniert, oder auch jeweils für sich genommen eingesetzt werden können.

## Patentansprüche

1. Lichtschranke zur Überwachung eines Torlaufweges aus einem Sender, einem Empfänger, einer Steuerung zur Ansteuerung des Senders und einer Auswerteeinheit zur Auswertung eines Signals vom Empfänger,
**dadurch gekennzeichnet,**
**daß** die Steuerung den Sender so ansteuert, daß das vom Sender abgegebene Signal in einer ersten Zeitspanne eine Signalstärke unterhalb einer Sendersignalschwelle und in einer zweiten Zeitspanne eine Signalstärke oberhalb der Sendersignalschwelle aufweist, wobei die Auswerteeinheit das vom Empfänger empfangene Signal nur dann als gültig erkennt, wenn es eine diesem Muster entsprechende Signalform aufweist.

2. Lichtschranke nach Anspruch 1, wobei die Signalstärke des vom Sender abgegebenen Signals während der ersten und/oder der zweiten Zeitspanne jeweils konstant ist, so daß der Sender während der ersten Zeitspanne mit einer ersten Signalstärke und während der zweiten Zeitspanne mit einer zweiten Signalstärke arbeitet, wobei vorteilhafterweise die erste Signalstärke Null ist und/oder die zweite Signalstärke größer Null ist.

3. Lichtschranke nach Anspruch 1 oder 2, wobei die Auswerteeinheit das von dem Empfänger erzeugte Signal dahingehend auswertet, ob es unter oder über einer gewissen Empfängersignalschwelle liegt, wobei vorteilhafterweise die Auswerteeinheit das vom Empfänger empfangene Signal nur dann als gültig erkennt, wenn die Signalstärke während der ersten Zeitspanne unterhalb der Empfängersignalschwelle und während der zweiten Zeitspanne oberhalb der Empfängersignalschwelle liegt.

4. Lichtschranke insbesondere nach einem der vorangegangenen Ansprüche zur Überwachung eines Torlaufweges aus einem Sender, einem Empfänger, einer Steuerung zur Ansteuerung des Senders und einer Auswerteeinheit zur Auswertung eines Signals vom Empfänger,
**dadurch gekennzeichnet,**
**daß** die Steuerung den Sender so ansteuert, daß das vom Sender abgegebene Signal in einer dritten Zeitspanne eine dritte Signalstärke aufweist, welche in einem festen Verhältnis zu einer während einer zweiten Zeitspanne abgegebenen zweiten Signalstärke steht und kleiner als diese ist,
wobei die Auswerteeinheit das von dem Empfänger erzeugte Signal dahingehend auswertet, ob es unter oder über einer gewissen Empfängersignalschwelle liegt und die Steuerung das während der dritten Zeitspanne erzeugte Signal dazu heranzieht, um die Sendeleistung des Senders zu regeln.

5. Lichtschranke nach Anspruch 4, wobei die Steuerung die Sendeleistung des Senders erhöht, wenn das während der dritten Zeitspanne erzeugte Signal unter der Empfängersignalschwelle liegt, und die Sendeleistung des Senders verringert, wenn das während der dritten Zeitspanne erzeugte Signal über der Empfängersignalschwelle liegt.

6. Lichtgitter zur Überwachung eines Torlaufweges aus einer Mehrzahl von übereinander angeordneten Lichtschranken nach einem der vorangegangenen Ansprüche, wobei vorteilhafterweise eine gemeinsame Steuerung zur Ansteuerung der Lichtschranken und/oder eine gemeinsame Auswerteeinheit zur Auswertung der Signale der Lichtschranken vorgesehen ist.

7. Lichtgitter nach Anspruch 6, wobei die einzelnen Lichtschranken nacheinander so angesteuert werden, daß jeweils nur maximal eine Lichtschranke aktiv ist, wobei vorteilhafterweise mindestens eine Schaltsignalleitung vorgesehen ist, über welche die Lichtschranken nacheinander ein und aus geschaltet werden, und mindestens eine Steuersignalleitung, über welche die vom Sender abgestrahlte Signalform gesteuert wird, wobei vorteilhafterweise die gleiche Schaltsignalleitung und/oder die gleiche Steuersignalleitung zur Ansteuerung aller Lichtschranken herangezogen wird und/oder wobei die Empfänger der Lichtschranken ein Signal an eine gemeinsame Ausgangssignalleitung abgeben und die Auswerteschaltung das Signal auf dieser gemeinsamen Ausgangssignalleitung auswertet.

8. Lichtgitter nach Anspruch 7, wobei die Auswerteschaltung eine Lernfunktion aufweist, welche das von den einzelnen Lichtschranken durch das Signal auf der Schaltsignalleitung nacheinander abgegebene Signal bei unversperrtem Weg und maximaler Sendeleistung als Referenz abspeichert, wobei vorteilhafterweise die Zeiten abgespeichert werden, zu denen das von den einzelnen Empfängern erzeugte Signal beginnt und/oder endet, und wobei die Steuerung vorteilhafterweise für den darauffolgenden Betrieb die den jeweiligen Lichtschranken zugeordneten Zeitbereiche in einen ersten, zweiten und/oder dritten Zeitbereich aufteilt.

9. Lichtgitter nach Anspruch 7 oder 8, wobei die Ansteuerung der Lichtschranken über ein analoges Schaltsteuersignal auf der Schaltsignalleitung erfolgt, insbesondere über eine Rampenfunktion, wobei vorteilhafterweise ein einziges Signal zur Ansteuerung aller Lichtschranken eingesetzt wird, und weiterhin vorteilhafterweise das Signal sowohl zur Ansteuerung der Sender als auch der Empfänger eingesetzt wird und/oder wobei die Sender und/oder die Empfänger jeweils einen Fensterkomparator aufweisen, welcher den Sender bzw. Empfänger einschaltet, wenn die am Fensterkomparator anliegende Spannung in einem vorbestimmten Fenster liegt und/oder wobei die Sender und/oder die Empfänger jeweils einen Meßwiderstand aufweisen, wobei die Meßwiderstände der Sender und die Meßwiderstände der Empfänger jeweils in Reihe geschaltet sind, wobei vorteilhafterweise die Fensterkomparatoren jeweils eine Spannung abgreifen, welche an den in Reihe geschalteten Meßwiderständen abfällt, wobei die Spannung vorteilhafterweise jeweils zwischen einem gemeinsamen Spannungseingang der Lichtschranken und einem Anschluß des dem jeweiligen Fensterkomparator zugeordneten Meßwiderstands abgegriffen wird, wobei weiter vorteilhafterweise die einzelnen Lichtschranken identisch ausgeführt sind und insbesondere die gleichen Meßwiderstände und/oder Fensterkomparatoren aufweisen.

10. Torsteuerung zur Ansteuerung eines Torantriebs mit einer Lichtschranke oder einem Lichtgitter nach einem der vorangegangenen Ansprüche zur Überwachung des Torlaufweges.
